# EUROPEAN PATENT APPLICATION

(11) **EP 4 563 818 A1**
(43) Date of publication of application: **04.06.2025**
(21) Application number: 23386123.6
(22) Date of filing: 28.11.2023
(51) Int. Cl.: F03G 7/10

(54) **ROTATIONAL MECHANICAL ENERGY GENERATION SET**

(71) Applicant: Karramanoukian, Haroutoun, Yerevan (AM)
(72) Inventor: Karramanoukian, Haroutoun, Yerevan (AM)
(74) Representative: Argyriadis, Korinna

(57) **Abstract**

It is disclosed a machine that has two big effective forces.

**First force:** its main arms (6), which is the main force and generates the rotating force necessary to generates-the energy. **Second force:** a force (front) for the centres of the secondary arms weights, being a huge force we could use as a force to open and close the main arms (6) and forms a strong front at the bottom right of the machine as it rotates.

There is also a significant increase in the force torque generated by the machine due to creating a gap for the centres of the secondary arms weights at the top and left of the machine doubling the force at down and right of the machine and creating a gap to the weights centres at the top and left of the machine and thus generating huge force we can use to open the main arms (6) at the top of the machine and close the main arm (6) at the bottom of the machine during its rotating benefiting from two thirds of the front force and the last third remaining from the front force being enough to rotate the centres of secondary arms weights. the small hinged arm (42) with the weight (8) are fixed on the metal link (16), and the link (16) which hinged with, and fixed on the secondary arm, and in this process resulting that all the weight is relating to the secondary arm and in this process when the lock (48) opens and the set goes down by the acceleration of the earth gravity simultaneously the arm hinge (42) starts to rise gradually up from Zero to 180 degrees and in the same time the link (16) moving from (25B) to the next (25B). All these movements happen during the machine rotation. The hinged arm (45) is a balance arm balancing between the weight (8) and the hinges which are related to secondary arm, and also balancing between (41) and (47) which are the two sides of the hinged arm (45).

## Description

This invention is a mechanical set composed of a main pivot with pulleys on its two edges fixed on the machine's base and in the middle of the main pivot a large metallic plate is fixed as shown in Figure (1), and also on the two edges of the large plate, metallic plates of smaller diameters are fixed, two on its right edge and another two on its left edge where these plates are connected with each other to become one single body and the main and secondary arms along with their accessories are fixed on them.

With this machine/ invention and its front force, we are capable of lifting dozens nay thousands of tons of weights against acceleration due to gravity per second as well as of making use of it to start up the machine/ invention thus, to generate mechanical rotational energy and consequently, to convert this energy to a clean electrical energy.

### Technical state of the invention

The invention has two powerful operative forces:
- The first force is the main arms (6): it is the main force that generates the rotational force, which is required to produce energy.
- The second force: is the front force of the centers of gravity of the secondary arms. It is a very powerful force of which we can benefit as a power to open and close the main arms (6). It constitutes a powerful front on the bottom right of the machine during its rotation (of the machine) as well as it produces a significant increase in the moment of the force generated by the machine due to the creation of a vacuum for the centers of gravity of the secondary arms on the top left of the machine. Thus, multiplying the force on the bottom right of the machine and making a vacuum for the centers of gravity on the top left of the machine which will generate an enormous force which can be used to open the main arm (6) on the top of the machine and to close the main arm (6) on the bottom of the machine during the rotation of the machine. In such case, we would have benefited from the two-thirds of the front force, while the remaining one third of the front force will be sufficient to start up the centers of gravity of the secondary arms.

As it is clearly shown in Figure (2) clarifying that the main power of the machine/ invention is in the main arms (6) and that the rotational moment resulting from loading the main arms with the weights (7) remains constant and does not decrease at all during the starting up of the machine/ invention.

### The second development on secondary arm (9)

The purpose of this development process is several important objectives.

The first one is the economic purpose, where the cost of creating this machine was saved by replacing and dispensing some metal pieces, such as relieving the secondary arm weight, and dispensing some rollers and cables and modifying some fixing centres and some hinged arms, as a result the weight of the machine was reduced almost by half, while maintaining the machine's purpose of generating clean electricity with no environmental pollution, and ensure the machine works more securely and maintains its balance, consistency and synchronization and mechanical harmony, and at a lower noise level.

The machine efficiency also has been raised which is the second and important purpose of this development. These adjustments have led to increase the torque on the main machine's axis, and this leads to increase the energy which is produced by the generator threefold time's than before.

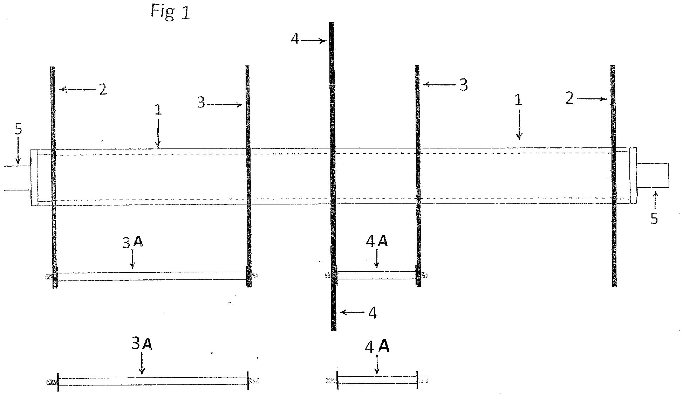

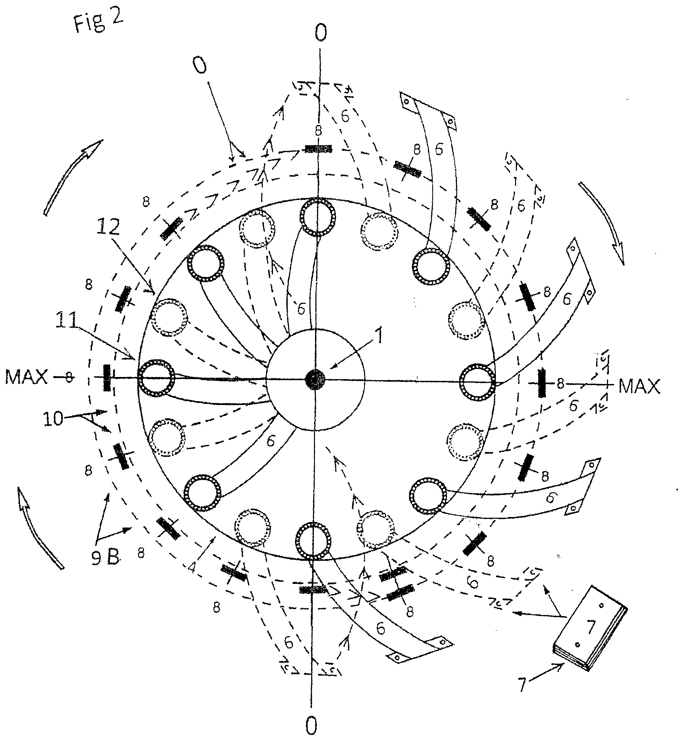

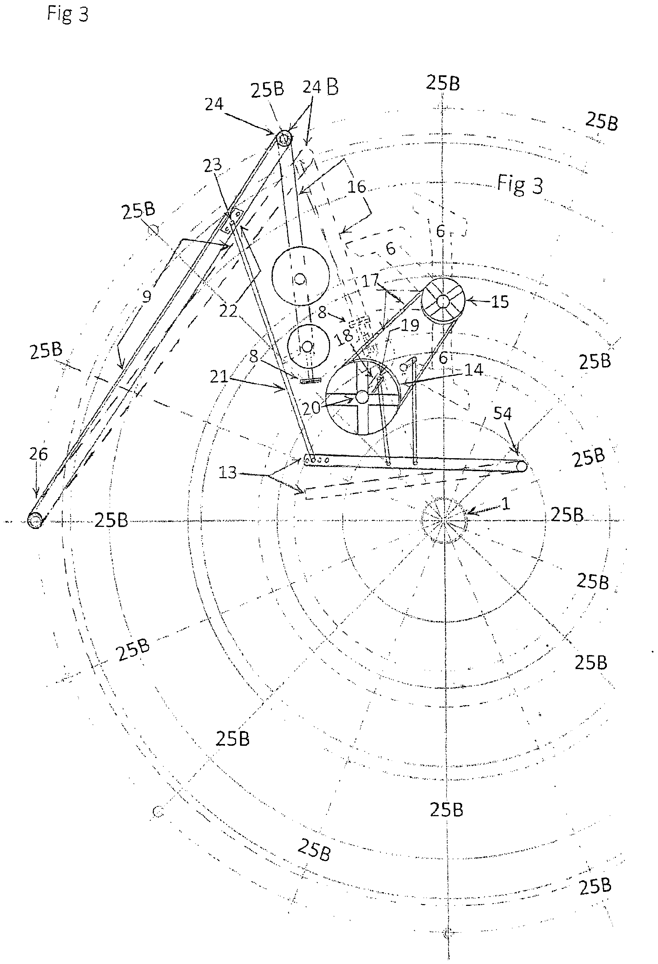

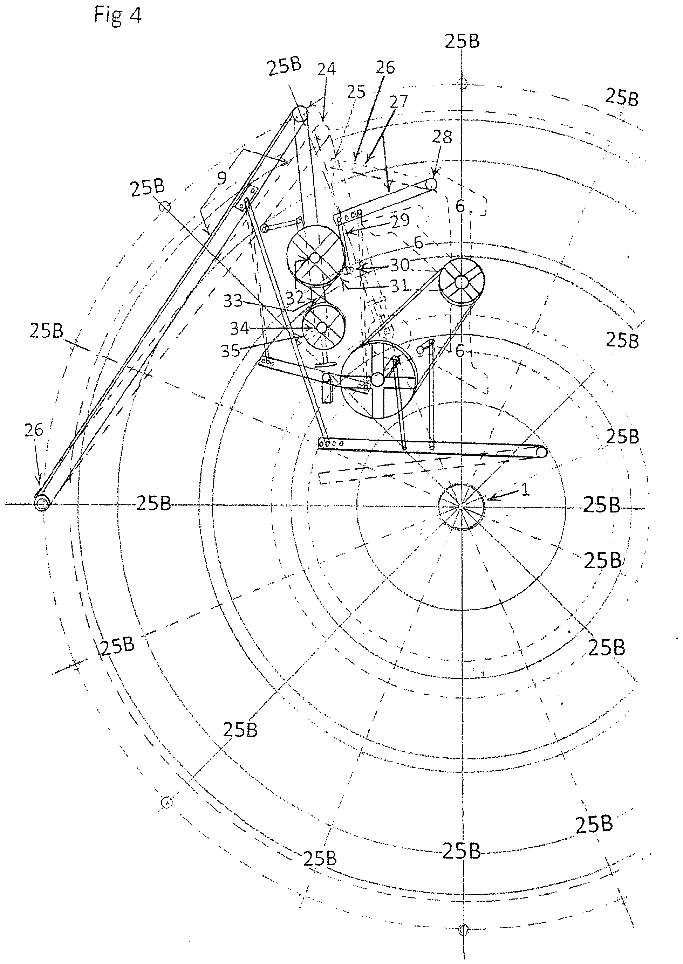

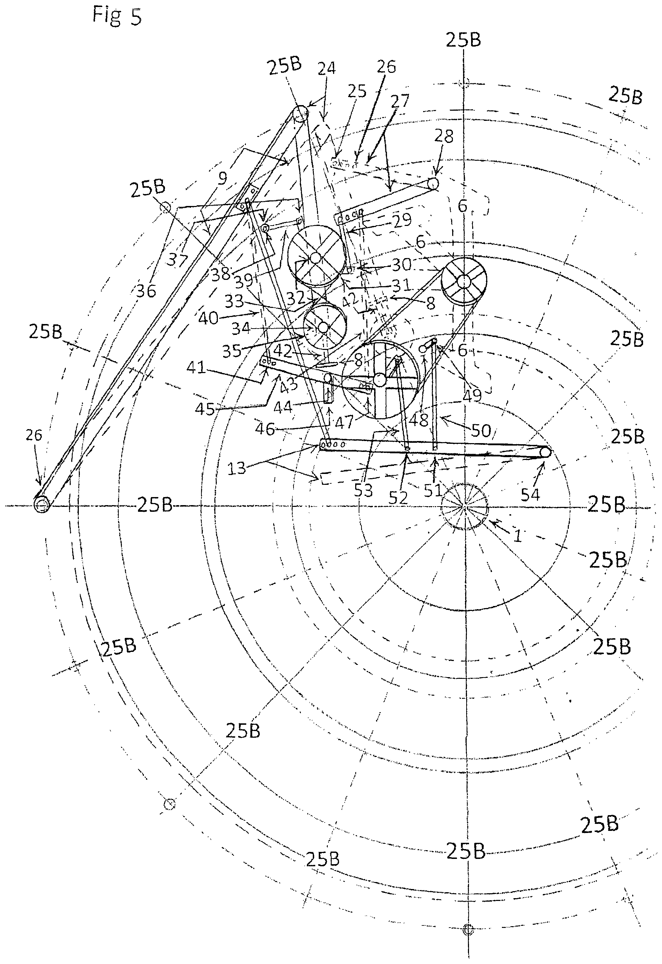

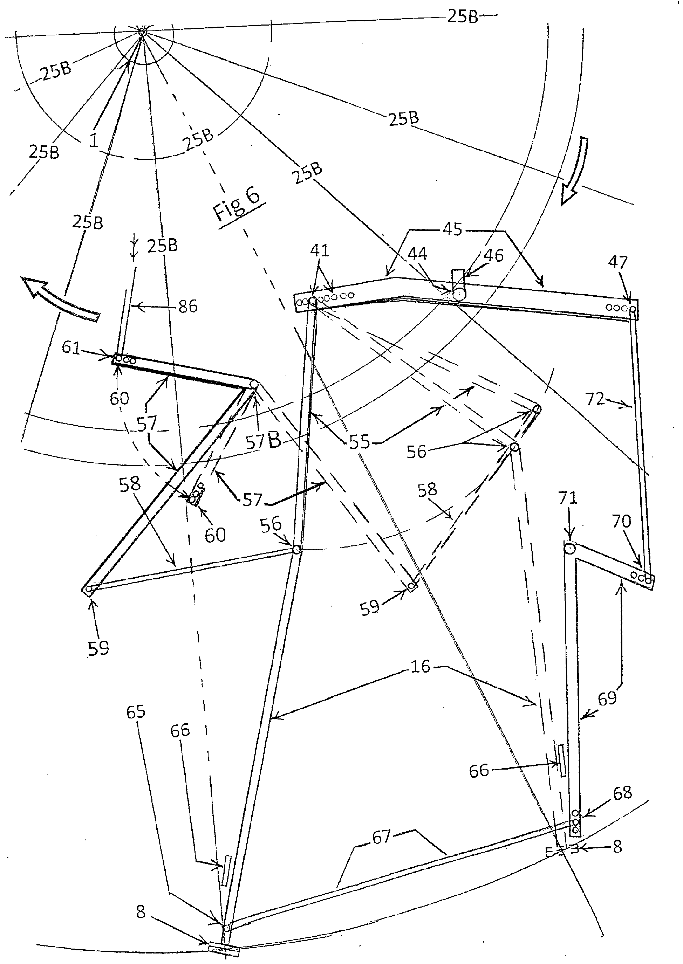

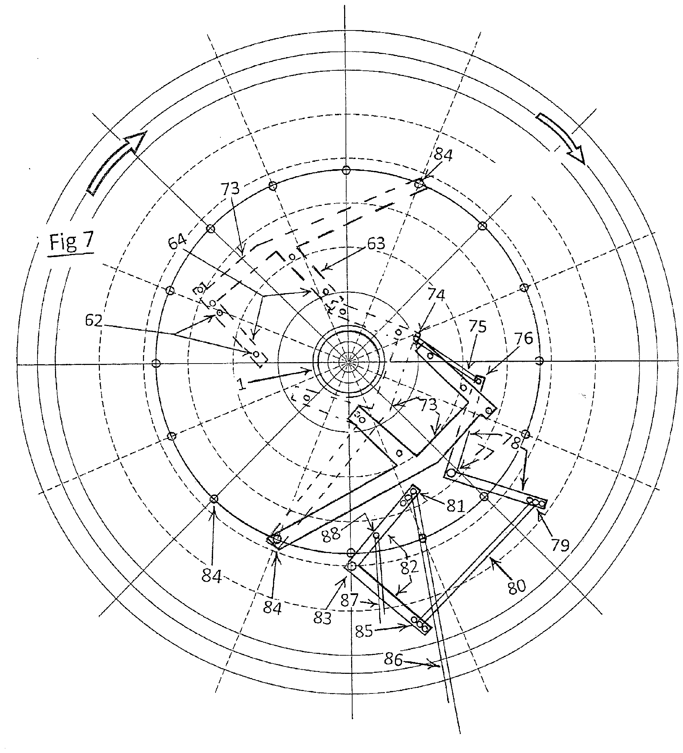

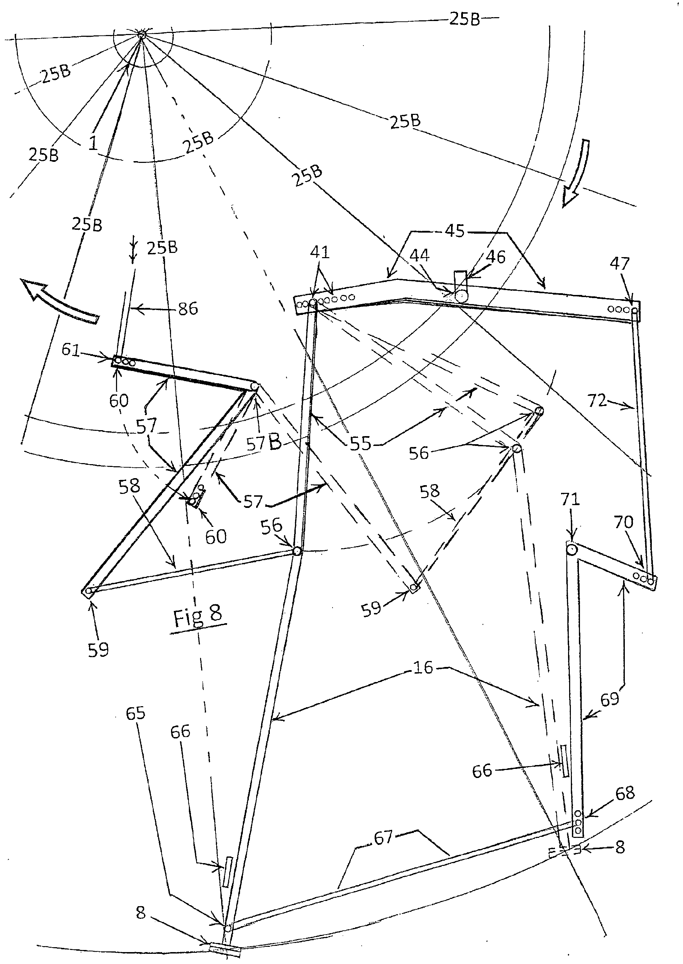

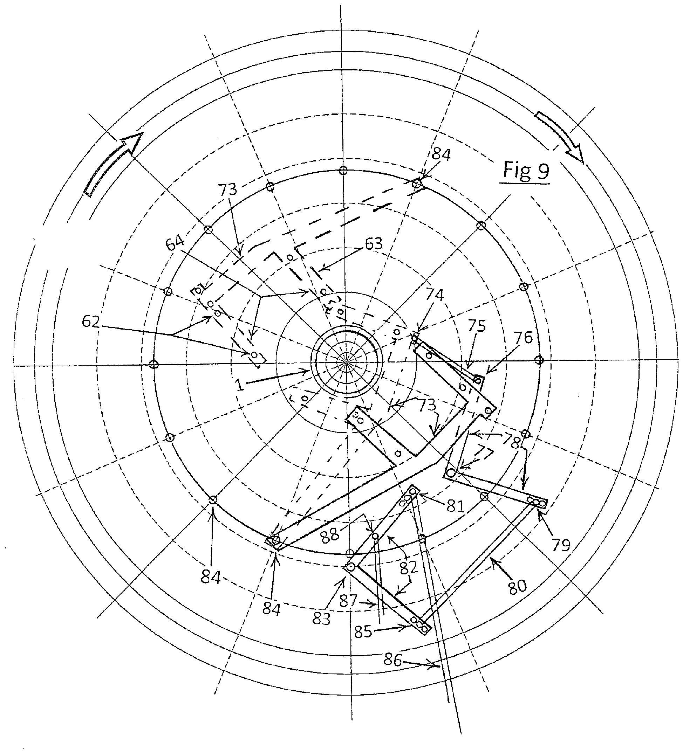

### Clarification made to the organization of the Figure (1), page 119:

It is a method used to fix the metallic plates on the main pivot and then a method used to fix the main and secondary arms along with their accessories on these plates.

At first, the big main plate (4) has been fixed on the main pivot in the middle. Consequently, its two plates (2) and (3) were fixed in a smaller diameter on the right of the main plate and its two plates on its left and thus, dividing the plates into sixteen parts on their peripheries in order to fix sixteen sets.

Where each set consists of:
The main arm and the secondary arm along with their accessories where eight sets are distributed on the right of the machine and eight sets on the left of the machine; they were organized in this form so that the sets shall not collide with each other first, and then, so that the weight shall be distributed evenly on the main pivot in order to protect the main pivot from bending forward.

In order to further protect the main pivot from bending forward, that is to say, to protect the invention, we connect the metallic plates with each other with round steel pivots (3A) and (4A) so that the plates and the main pivot will become one single body and therefore, protecting further the main pivot from bending forward as it is shown in Figure (1), page 1/9, and making the main pivot more capable of bearing weights.

Based upon the above mentioned, we conclude that:
The movement of the main arms lies in the opening from the top of the machine where they become distant from the main pivot of the machine and in their closure where they become close to the main pivot of the machine from the bottom of the machine, similarly to the balance of nature on earth, where the living creatures breed on the one hand and die on the other hand, thus creating the balance of nature.

The same applies to the machine/ invention; a main arm opens on the top of the machine i.e. "born" and a main arm closes at the same time on the bottom of the machine i.e. "dies", thus, maintaining the rotational balance of the machine and the continuity of its rotation.

This process is made unless a mechanical failure occurs in the machine or unless we shut down the machine.

Here we explain the second development process applied to the second arm (9) by the arm (55) plus to transfer the centre of the weight (8).

Firstly: the hinge arm (55) is considered as transmission arm which moves the joint metal link (16) in for directions (left - right, and up - down), during this movement the arm (16) travels the distance from (25B) to the next (25B) with synchronization with the movement of the hinged arm (55) which (during the rotation of the machine) helps to open and close the main arm and precisely synchronizes to open and close the automatic lock (48). Mention should be made here of the important role of the balance arm (45) in achieving this synchronization between previous movements of arms because it's connected to him.

Secondly: transfer the centre of the weight (8) to the top of the machine sets the front of the machine in top, instead of it being in the middle. As a result of this transfer and during the rotation of the machine we had an increase of the torque power on the main machine's axis three times bigger than before, thus an increase in the electrical power drawn from the generator three times bigger than before the development.

In this development a new arm was added as the third arm (73) which is fixed on the perimeter of the machine's main axis, and on the tip of this arm we fix the weight (8B). The third arm presses the hinged arm (55) and helps it's movement, also it helps the moving hinged arms (16) in their movement with the influence of the weight (8) and their accessories.

This development increases the strength and speed of the group as it moves forwards and backwards, and upwards and downwards.

Of course, this addition to the new third arm applies to all parts of the machine and so we get a group of new arms added, which are similar to the third arm (75) in their work and their impact on the rest of the hinged arms.

### The functioning of the set:

The machine / invention is constituted of the main pivot (1) as shown in Figure (1). Pulleys are installed on the two edges of this pivot and are fixed on fixation centres (5) and in the middle of the main pivot, the metal plate of a large diameter (4) is fixed. Then on the right edge of the large plate, a plate of a smaller diameter (3) is fixed then the plate (2), and then, the plate no. (3) is fixed on the left edge of the main plate /large/ then the plate number (2) is fixed.

For the five plates to form one interrelated body with each other, they are fixed together using steel pivots number (3-A) and (4-A) until all the plates form together one body, this protects the main pivot from bending forward.

The main arms are installed between the plate (4) and the plate (3) while the secondary arms and their accessories are installed between the two plates (2, 3).

### Important remark:

The number of pivots (3-A) and (4-A) is specified according to the diameter of the steel plates to protect the main pivot from bending forward.

The previous set constituted of the main pivot and the metallic plates fixed on it was made in order to arrange the centres of the pulleys and the pivots carrying all the main arms and secondary pivots and their accessories. Each set is composed of a main pivot, a secondary pivot and their accessories. The number of sets in the machine is 16 sets distributed as shown in Figure (1) where we install eight sets to the left edge of the machine then eight sets to the right edge of the machine so that the sets do not collide with each other, and so that the weights are distributed equally on the main pivot which gives the main pivot a second protection and prevents it from bending forward.

According to the machine's diameter we can increase the number of the above-mentioned sets, i.e. instead of sixteen sets, their number may be either increased or decreased.

### Special principles to achieve the successful rotation of the machine/ invention

### Figure (2), Page 2/9

Figure (2) shows the location of the main arms and indicates that the machine and main arms are rotating clockwise where (6) refers to the main arms which are the main force producing the rotational mechanical energy.

To achieve the location of the arms as in Figure (2) i.e. opening the arms (6) from the top of the machine, distant them from the main pivot and closing the arms from the bottom of the machine i.e. bringing them closer to the main pivot / we need an external force to assist us in this.

Another type of arms was invented and manufactured which was named the secondary arm as shown in Figure (3).

In Figure (2), during the rotation of the machine, one arm should be lifted twice, once from bottom to top where it approaches the main pivot at the bottom of the machine and a second time in the same arm, we should move it away and lift it upwards away from the main pivot from the top of the machine, and in order to solve the problem of lifting same, we brought an external force which we called the secondary arm, this way we would have solved the problem of lifting the main arm twice from the bottom and from the top in each single cycle of the machine.

The organization of the main arms (6) shall be in conformity with the explanatory Figure (2) so that the machine would rotate.

### Figure (3), page 3/9:

How does the secondary arm work to lift the main arm (6) twice in a single rotation of the machine?

The secondary arm is fixed between the two metallic plates (2) and (3) in Figure (1) and we will clarify the articulation process in Figure (3) and this, in the joint (26).

In addition, Figure (3) of the secondary arm clarifies the distribution of the weights (8) and their number amounting to sixteen on their peripheries which we named (25B).

During the rotation of the machine, the secondary arm pushes the part number (13) through the joint number (21). We named the movement transmission arm as being number (13) which constitutes a very important part in the machine rotation process.

This arm is fixed on the metallic plates (2,3).

The moment is transferred through the movement transmission joint (13) to the joint (30) where the big pulley (14) operates in order to open the main arm (6) through cables (17) and a small pulley (15).

This movement transmission arm is also responsible for the process of activating the lock number (48) through the joint number (50).

During the rotation of the machine, the joint (16) moves from the track (25B) to the next track (25B) and remains in this vertical position till reaching the end of its track. This is the joint position number (16) on the top of the machine. However, on the bottom of the machine, the situation is completely different since the joint (16) starts its movements in a vertical position and moves counter-clockwise. The more, the machine moves clockwise, the more, the joint (16) inclines and moves from the line (25B) to the next line (25B). This inclination generates an enormous moment of the force that might destroy the machine. In case this energy was uncontrolled, this energy needs powerful suppressors in order to absorb it. However, instead of using these suppressors, we have benefited from this enormous power to assist the next secondary arm through springs one by one in this way in the right and left parts of the machine.

The use of the moment of the force in assisting the secondary arm enables us to open the set prior to reaching its previous position thus this makes the upper front weaker and the bottom front stronger which generates an enormous energy for the machine.

### Remark:

Assisting the secondary arm at the bottom of the machine shall be made by installing springs.

### Figure (4), page 4/9:

A metallic joint is fixed on the pivot of the big pulley (14) on which the joint (30) is fixed and is articulated with the movement transmission number (13) in order to start up the big pulley (14).

### Figure (5), page 5/9:

An articulated joint between the base (18) and the movement transmission number (13) where it is articulated with the movement transmission in the articulation centre (31).

(24B)- the new position of the hinges centre (24) after moving the secondary arm downward from (25B) to next (25B) to open the main arm while the machine is rotating and this happens when the lock (48) is unlocked while the machine is rotating.

A hinged arm (45) which is a balance arm that balances between the weight (8) and the hinges which are related to the secondary arm also that balances between (41) and (47) which they are the two ends of the hinged arm (45).

### Figure (6), page 6/9:

The hinged arm fixed between the balance arm (45) that is moving the hinged link (16), it's fixing centre (41) being on the tip of the balance arm (45), with the fixing centre of the arm (55) on the moving hinge link (16).

The angle hinged arm moves the hinged arm (55) forward and backward, at the same time it moves the hinged link (16) and the weight (8) forward and backward from (25B) to the next (25B). The hinged link (58) is fixed on tow fixing centres (59) and (56), the hinged link fixing centre (59) is fixed on the arm (55). The hinged link (60) fixing centre (61) on the hinged arm has an angled shape. The hinged link fixing centre (68) on the arm (57)

### Figure (7), page 7/9:

The weight (8B) fixing centre (62) on the third arm (73), the second fixing centre (63) of the weight (8B) on metal piece which is fixed on the third arm (73), the weight (8B) being evenly distributed on both sides of the third arm so that each side carries 50 % of the weights. The hinged link (63B) fixing centre (87). The positions (64) of the third arms (73) during machine rotation which move down respectively from top to bottom of the machine under the influence of earth's gravitational acceleration force one by one.

### Figure (8), page 8/9:

The hinged link fixing centre (65) on the moving hinged arm (16). The metal piece (66) on the machine body in which the moving hinged link (16) is based. The hinged link (67) fixed on tow fixing centres (65) and (68).

The hinged link (68) fixing centre (67). The moving hinged arm (69) which has an angled shape. The hinged link fixing centre (70) on the arm (69).

The hinged arm (71) fixing centre (69). The hinged link (72) between tow fixing centres (47) and (70).

### Figure (9), page 9/9:

The new moving third arm (73) with the hinged link (74) fixing centre (75), the hinged link between tow fixing centres (74) and (76), the hinged link fixing centre (75), the moving hinged arm fixing centre (77) which has an angled shape (78) for moving the hinged arm (55).

The hinged link (79) fixing centre (80) between tow fixing centres (79) and (85). The link fixing centre (86) on the moving hinged arm (82) which has an angled shape so that the two moving hinged arms (82), (78) can change the fixing centres from start position to the required position.

The hinged link (83) fixing centre (81), the new third hinged arm fixing centre (84), the hinged arm fixing centre (85) on the hinged arm (82), the hinged link (86) between tow fixing centres (81) and (64), the hinged link (87) fixed on the balance arm by tow fixing centre (88) and (41).

### Brief explanation of operation of invention:

The machine (the invention) has two big effective forces. **First force:** its main arms (6) which is the main force that generates the rotating force necessary to generates-the energy. **Second force:** a force (front) for the centres of the secondary arms weights, being a huge force we could use as a force to open and close the main arms (6) and forms a strong front at the bottom right of the machine as it rotates.

There is also a significant increase in the force torque, which is generated by the machine, and that because of creating a gap for the centres of the secondary arms weights at the top and left of the machine. This means a doubling of the force at down and right of the machine and creating a gap to the weights centres at the top and left of the machine and that is generating huge force which we can use to open the main arms (6) at the top of the machine and close the main arm (6) at the bottom of the machine during its rotating and so benefite-d- from two thirds of the front force, the last third remaining from the front force being enough to rotate the centres of secondary arms weights.

So the small hinged arm (42) with the weight (8) is fixed on the metal link (16), and the link (16) which hinged with, and fixed on the secondary arm, and in this process resulting that all the weight is relating to the secondary arm and in this process when the lock (48) opens and the set goes down by the acceleration of the earth gravity simultaneously the arm hinge (42) starts to rise gradually up from Zero to 180 degrees and in the same time the link (16) moving from (25B) to the next (25B).

Ofcourse all these movements happen during the machine rotation.

The hinged arm (45) is a balance arm balancing between the weight (8) and the hinges which are related to the secondary arm, and also balancing between (41) and (47) which are the two sides of the hinged arm (45).

List of numbers of parts of which the machine/ invention is made, and their functions:
1. The main pivot of the machine (1)
2. A metallic plate (2) fixed on the left edge of the machine as well as on the right edge
3. A metallic plate (3) fixed on the left edge of the machine as well as on the right edge
   3A- a steel pivot connecting each of the two plates so that the metallic plates and the
   3B- a steel pivot connecting each of the two plates main pivot will become one single body.
4. A metallic plate (4) with a bigger diameter than the two plates (2, 3) fixed in the centre of the machine
5. The fixation centre of the pulleys of the main pivot
6. The main arm
7. The centre of gravity of the main arm
8. The centre of gravity of the secondary arm
9. The secondary arm
   9B. It clarifies the external track of the centres of gravity of the secondary arm, which is the track distant from the main pivot.
10. It clarifies the internal track of the centres of gravity of the secondary arm, which is the track close to the main pivot.
11. Fixation centres of the main arms articulations in the left edge of the machine
12. Fixation centres of the main arms articulations in the right edge of the machine
13. It is a very important part being considered as a movement transmission arm from the secondary arm number (9) to the number (13) fixed on the two plates number (2) and (3) where the moment of the secondary arm is transferred through the joint number (21).
14. Big metallic pulley
15. Small metallic pulley
16. Moving metallic joint or hinged link
17. Steel cables connected between the two pulleys number (14) and (15) in order to transmit the movement and to open and close the main arm.
18. A metallic joint fixed on the pivot of the big pulley number (14) on which the joint number (53) is fixed and is articulated with the movement transmission number (13) in order to start up the big pulley number (14).
19. Position of fixation for the connector (53)
20. A centre for the big metallic pulley number (14)
21. An articulated joint between the secondary arm number (9) and the movement transmission arm number (13).
22. An articulated centre for the secondary arm located between (23) and (9) which a centre fixed on the secondary arm and the functioning of this articulation is to control the joint number (16).
23. A metallic joint fixed on the secondary arm.
24. Centre to fix the moving metal link (16)
25. Centre to fix hinged link (29)
26. Centre to fix the hinge (43)
27. Hinged arm to fix metal link (43)
28. Centre to fix the hinge (27)
29. Hinged link on (25), (29)
30. Hinged centre on the large pulley to fix the link (29)
31. Large pulley to move small hinged arm (42) to raise him upward from more than zero point to 180 degrees
32. Centre to fix the large pulley (31)
33. Steel cable between the large pulley (31) and small pulley (35)
34. Centre to fix the small pulley (35)
35. Small pulley to move the small hinged arm (42) upward from more than zero point to 180 degrees
36. Piece of metal fixed on large pulley to fix the link (39) for moving the metal link (16) from (25B) to the next (25B)
37. Piece of metal fixed on the machine body
38. Centre to fix the link (39)
39. Hinged link between (36), (38)
40. Hinged link between the secondary arm and hinges centre (41) of the balance arm
41. Centre to fix the hinged link on the balance arm
42. Small hinged arm which carries the secondary arms weight (8)
43. Hinged link between the balance arm (45) and the hinge (27)
44. Centre to fix the balance arm (45)
45. Hinged arm which is a balance arm that balances between the weight (8) and the hinges which are related to the secondary arm also that balances between (41) and (47) which are the two ends of the hinged arm (45)
46. Base fixed on the machine body and fixed on it the hinged arm (45)
47. Centre to fix the hinged link (43)
48. Auto Lock (Automatic)
49. Hinged links centre between (48) and hinged arm (13)
50. Hinged link on (49), (51)
51. Hinge centre on hinged link (50)
52. Hinge centre on (53)
53. Hinged link between (52), (19)
54. Centre to fix the hinged link (13)
55. Hinged arm fixed between the balance arm (45) and moving hinged link (16), it's fixing centre (41) is on the tip of the balance arm (45).
56. Fixing centre of the arm (55) on the moving hinge link (16).
57. Angle hinged arm moves the hinged arm (55) forward and backward, at the same time it moves the hinged link (16) and the weight (8) forward and backward from (25B) to the next (25B)
58. Hinged link fixed on tow fixing centres (59) and (56).
59. Hinged link fixing centre on the arm (55).
60. Hinged link fixing centre (61) on the hinged arm which has an angled shape.
61. Hinged link fixing centre (68) on the arm (57)
62. Weight (8B) fixing centre on the third arm (73)
63. The second fixing centre of the weight (8B) on metal piece which is fixed on the third arm (73), the weight (8B) being evenly distributed on both sides of the third arm so that each side carries 50 % of the weights.
   63B. Hinged link fixing centre (87).
64. The positions of the third arms (73) during machine rotation which move down respectively from top to bottom of the machine under the influence of earth's gravitational acceleration force one by one.
65. Hinged link fixing centre on the moving hinged arm (16).
66. Metal piece on machine body in which the moving hinged link (16) is based
67. Hinged link fixed on tow fixing centre (65) and (68).
68. Hinged link fixing centre (67).
69. The moving hinged arm which has an angled shape.
70. Hinged link fixing centre on the arm (69).
71. Hinged arm fixing centre (69).
72. Hinged link between tow fixing centres (47) and (70).
73. The new moving third arm.
74. Hinged link fixing centre (75).
75. Hinged link between tow fixing centres (74) and (76).
76. Hinged link fixing centre (75).
77. Moving hinged arm fixing centre which has an angled shape.
78. The moving hinged arm which has an angled shape for moving the hinged arm (55).
79. Hinged link fixing centre (80).
80. Hinged link between tow fixing centres (79) and (85).
81. Link fixing centre (86) on the moving hinged arm (82).
82. Moving hinged link which has an angled shape so that the two moving hinged arms (82), (78) can change the fixing centres from start position to the required position.
83. Hinged link fixing centre (81).
84. The new third hinged arm fixing centre.
85. Hinged arm fixing centre on the hinged arm (82).
86. Hinged link between tow fixing centres (81) and (64).
87. The hinged link, fixed on the balance arm by tow fixing centre (88) and (41).
88. Hinged link fixing centre (87).

## Claims

1. Device for generation of power, **characterized by** the fact that the rotating mechanical power depending on its continued rotating movement through the secondary arms (9) and on the front being created by the secondary arm weights, wherein two weights are matched in the right lower part of the machine, and create a gap in the left upper part of the machine, wherein the main arms (6) and the secondary arms (9) are of permanent shape, wherein the ratio of the weights between the main arms and the secondary arms is maintained, wherein the weights by the main arm length and the secondary arm weights must be always larger than the main arm weight to invent the force.

2. A device according to claim 1, **characterized by** the fact that it rotates even without the main arm, only by the secondary arms and creates energy.

3. A device according to claim 1, **characterized by** the fact that a mechanical lock (Auto) (48) locks the primary arms and their accessories and keeps it steady and close to the main axis during the machine rotation at the bottom of the machine and then opens (the lock) from the top of the machine as it rotates to release the main arm and its accessories and deport him from the main axis.

4. A device according to claim 1, **characterized by** the fact that the large pulley (4) transfers the movement to the little pulley by two steel cables (17) and from there to the main arm to implement the process of opening and closing it.

5. A device according to claim 1, **characterized by** the fact that in order to develop the secondary arm when the machine is rotating clockwise the developed link (16) which carries the secondary arm weights (8) moves also with it clockwise, diagonally to the end of its journey from the path (25B) to the next (25B).

6. A device according to claim 1, **characterized by** the fact that at the bottom of the machine the link mode (16) varies because of its moving counterclockwise and as the machine rotates the link (16) tilts more and more because it is moving counterclockwise from (25B) to the next (25B) thus generating a huge torque strength to benefit from helping the secondary arm coming after it by the springs one by one in the same way on the right and left of the machine using said torque to help the secondary arm, enabling opening the set before its previous centre, so the top front gets weaker than before and the machine gaining a huge force, opening of the set before its center

7. A device according to claim 1, **characterized by** the fact that the small hinged arm ((42 with the weight (8) are fixed on the metal link (16), and the link (16) which is hinged with, and fixed on the secondary arm, resulting that all the weight is relating to the secondary arm and in this process when the lock (48) opens and the set goes down by the acceleration of the earth gravity simultaneously the arm hinge (42) starts to rise gradually up from Zero to 180 degrees and in the same time the link (16) moving from (25B) to the next (25B).

8. A device according to claim 1, **characterized by** the fact that the hinged arm (45) is a balance arm balancing between the weight (8) and the hinges which are related to the secondary arm, and also balancing between (41) and (47) which are the two sides of the hinged arm (45).
